# FASCICULE DE BREVET EUROPEEN

(11) **EP 4 454 954 B1**
(45) Date de publication et mention de la délivrance du brevet: **29.07.2026**
(21) Numéro de dépôt: 24168697.1
(22) Date de dépôt: 05.04.2024
(51) Int. Cl.: B60R 13/04, B62D 25/08

(54) **AGENCEMENT DE CARROSSERIE D'UN VÉHICULE AUTOMOBILE COMPORTANT UN OBTURATEUR LATÉRAL**
KAROSSERIEANORDNUNG EINES KRAFTFAHRZEUGS MIT SEITLICHEM VERSCHLUSS
MOTOR VEHICLE BODY ARRANGEMENT WITH A SIDE SHUTTER

(30) Priorité: 28.04.2023 FR 2304327
(43) Date de publication de la demande: 30.10.2024
(73) Titulaire: Renault s.a.s, 92100 Boulogne Billancourt (FR)
(72) Inventeur: ANDREZE-LOUISON, Kevin, 78280 GUYANCOURT (FR); CONVERS, Philippe, 78280 GUYANCOURT (FR); KOVACS, Ludovic, 78280 GUYANCOURT (FR)

(56) Documents cités:
- EP-A1- 2 489 578
- WO-A1-2015/092171
- US-A1- 2020 307 710

## Description

L'invention concerne un agencement de carrosserie d'un véhicule automobile dans la zone inférieure latérale du pare-brise.

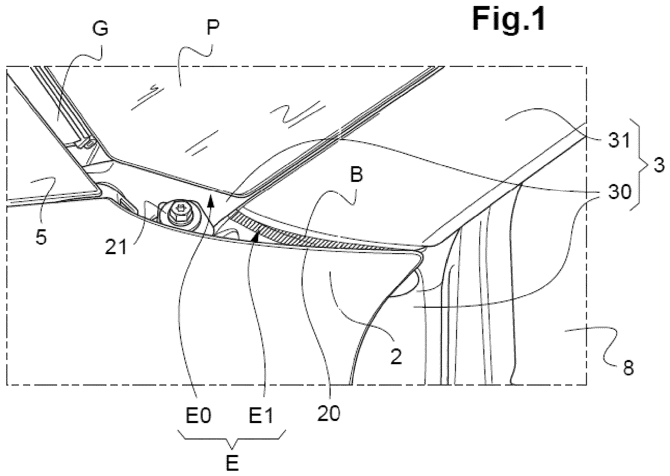

Comme illustré par la figure 1, de manière connue, la structure avant d'un véhicule automobile comprend une baie de pare-brise, et un agencement comportant un pied avant 3 et une aile 2 adjacents disposés de chaque côté du véhicule, au niveau des coins inférieurs du pare-brise P.

Un pied avant 3, dit aussi « pied A », est défini par un montant situé à l'avant du côté de caisse, notamment à l'avant de l'ouverture de la porte avant et sur le côté de la baie de pare-brise, comprenant d'une part une partie inférieure 30 , notamment en vis-à-vis de la face intérieure d'une aile 2 et avec une partie transverse interne, orientée transversalement vers le côté interne du véhicule et qui est adjacente au coin inférieur extérieur du pare-brise, et d'autre part une partie supérieure 31 correspondant au montant latéral de la baie de pare-brise. Un espace latéral E est ménagé notamment entre le pied avant et l'aile adjacents, symétriquement de chaque côté du véhicule. Il peut empiéter sur une partie située entre le capot et la base extérieure du pare-brise.

Cet espace latéral E est situé en chaque extrémité de l'ouverture réservée pour la grille d'auvent G entre le bord transversal arrière du capot recouvrant le compartiment moteur du véhicule, et le bord transversal inférieur du pourtour extérieur du pare-brise.

Un obturateur, dit obturateur latéral de la grille d'auvent, est installé latéralement, à la base extérieure du pare-brise, en chaque coin inférieur du pare-brise, pour fermer extérieurement, partiellement, cet espace latéral.

Il est en effet difficile d'obturer entièrement cet espace latéral E. L'obturateur couvre seulement une partie interne E0 de cet espace E, la partie latérale externe E1 de cet espace latéral E, située en extrémité de l'espace E du côté externe du véhicule, entre le pied avant et l'aile, et proximale du coin inférieur extérieur du pare-brise, étant très étroite. Lors du montage du véhicule, l'obturateur étant installé parmi les dernières pièces à monter, ladite partie latérale externe E1 de cet espace est difficile d'accès après le montage des autres pièces. Il n'y a pas de place pour implanter une fixation de l'obturateur dans cette zone, de sorte que l'obturateur est usuellement conçu sans obturer cette partie latérale externe E1 de l'espace latéral E.

Le terme « externe » fait référence à une position orientée vers et à proximité d'un bord latéral du véhicule par rapport au centre du véhicule, ou autrement dit fait référence à une position en extrémité latérale. Le terme « interne » fait référence à une position orientée vers le centre du véhicule.

Un inconvénient de cette obturation partielle de l'espace latéral entre une aile et un pied avant adjacents est qu'il reste un trou, correspondant à la partie d'espace latéral externe E1 non obturée entre une partie latérale du bord supérieur 20 de l'aile 2 et le pied avant 3, qui rend cette zone visible depuis l'extérieur, des pièces techniques pouvant aussi être visibles. Ceci apparaît inesthétique et induit une qualité perçue insuffisante. Cet inconvénient est d'autant plus important lorsque l'aile 2 et la partie supérieure du pied avant 31 (correspondant au montant de la baie de pare-brise) sont de couleurs/tons différents, une zone de brouillard de peinture B comportant ces deux couleurs/tons mélangés peut se former et est alors apparente dans cette partie d'espace latéral externe E1 non obturée. Les documents US 2020/307710 A1, WO 2015/092171 A1 et EP 2 489 578 A1 décrivent également des agencements connus de carrosserie de véhicule automobile.

L'invention vise à résoudre cet inconvénient. Elle vise à obturer la totalité de l'espace latéral en chaque extrémité de la grille d'auvent, notamment la partie d'espace latéral externe présente entre le bord supérieur d'une aile et un pied avant adjacents.

A cet effet, l'invention fournit un agencement de carrosserie d'un véhicule automobile, selon la revendication 1, comprenant un pare-brise, un pied avant et une aile adjacente disposés de chaque côté du véhicule, en chaque coin inférieur extérieur du pare-brise, avec un espace latéral ménagé au moins entre l'aile et le pied avant et une partie d'un coin inférieur extérieur du pare-brise adjacents entre eux, ledit espace latéral comprenant une partie d'espace latéral externe entre le pied avant et l'aile adjacente, ledit agencement comprenant un obturateur latéral disposé dans ledit espace latéral. Ledit obturateur comporte une partie latérale externe qui est insérée à force dans la partie d'espace latéral externe, et ladite partie latérale externe de l'obturateur comporte :
- une partie obturante sensiblement horizontale, de forme adaptée à la forme de ladite partie d'espace latéral externe, et,
- une partie de maintien reliée à la partie obturante par une charnière en matière amincie, s'étendant dans un plan sensiblement perpendiculaire par rapport à la partie obturante, ladite partie de maintien étant massive et comportant une forme géométrique lui apportant de la tenue.

On entend par « ladite partie de maintien s'étend dans un plan sensiblement perpendiculaire par rapport à ladite partie obturante » que ladite partie de maintien est orientée sensiblement suivant la direction verticale, la partie obturante étant sensiblement horizontale, mais que cette partie de maintien peut être un peu inclinée par rapport à la verticale, et donc par rapport à la partie obturante.

De manière préférée, la forme géométrique apportant de la tenue à ladite partie de maintien de ladite partie latérale externe de l'obturateur latéral est une forme (globalement) triangulaire.

En particulier, ladite forme triangulaire comporte un angle formant la pointe inférieure de ladite partie de maintien.

Plus particulièrement, ladite partie de maintien s'étend dans un plan sensiblement vertical et incliné par rapport à ladite partie obturante.

Selon un mode de réalisation préféré, le pied avant comprend une partie inférieure comportant un bossage tourné vers ladite partie de maintien de ladite partie latérale externe de l'obturateur, et ladite partie de maintien comporte des nervures, déformables élastiquement, apparentes en relief sur la face de ladite partie de maintien orientée vers le pied avant. Ledit pied avant et ladite partie latérale externe de l'obturateur sont agencés de sorte que lesdites nervures et le bossage soient face à face et aptes à venir en contact, avec éventuellement un jeu pour absorber les dispersions géométriques entre l'aile et le pied avant. Le bossage du pied avant est ainsi apte à coopérer avec lesdites nervures pour soutenir ladite partie d'espace latéral externe de l'obturateur, au moins suivant la direction verticale. Avantageusement ladite face de ladite partie de maintien orientée vers le pied avant, a une forme concave adaptée à la forme du bossage.

De préférence, ladite partie de maintien de la partie d'espace latéral externe de l'obturateur comporte une nervure d'appui inférieure, en relief apparent sur le bord latéral externe de ladite partie de maintien, et qui est en appui sur l'intérieur de l'aile. De préférence, l'extrémité latérale externe supérieure de la partie latérale externe de l'obturateur latéral comporte un bord latéral externe qui vient en butée contre la partie supérieure externe de l'intérieur de l'aile. En particulier ledit bord latéral externe est coupé droit.

Selon un mode de réalisation particulier, le pied avant comporte une partie supérieure formant le montant latéral de la baie de pare-brise et une partie inférieure qui supporte l'aile adjacente, et la partie supérieure du pied avant et l'aile ont des couleurs ou tons extérieurs différents. La partie latérale externe de l'obturateur permet de cacher le brouillard de couleurs/tons différents formé à la limite des parties supérieure et inférieure du pied avant

Selon l'invention, l'obturateur latéral a une partie principale formant avec ladite partie latérale externe une pièce monobloc et en matière déformable élastiquement, et ladite partie principale est fixée dans l'espace latéral, hors ladite partie d'espace latéral externe. Cette partie principale de l'obturateur latéral est fixée par des moyens de fixation conventionnels, tels que ceux de type clips, crochets, ou avec vis ou rivets par exemple.

L'invention a également pour objet un véhicule automobile, selon la revendication 9, comprenant un agencement de carrosserie tel que décrit précédemment. Un tel agencement est réalisé symétriquement latéralement, en chaque coin du pare-brise. L'agencement de carrosserie avec l'obturateur latéral selon l'invention permet de fermer l'espace latéral aux coins inférieurs extérieurs de pare-brise, notamment l'espace latéral de la grille d'auvent, y compris la partie d'espace latéral externe, sans fixation dans cette partie d'espace même très étroite.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] illustre, selon une vue en perspective du côté avant gauche d'un véhicule automobile, l'espace latéral à fermer entre le pied avant et l'aile à la base d'un pare-brise.
[Fig. 2] est une vue, en perspective du côté avant gauche d'un véhicule automobile, d'un agencement de carrosserie comprenant un obturateur latéral de la grille d'auvent suivant un mode de réalisation conforme à l'invention.
[Fig. 3] est une vue, en perspective partielle et de dessous, de l'obturateur latéral de la grille d'auvent de l'agencement illustré en figure 2.
[Fig. 4] représente une vue écorchée et de côté de l'agencement illustré en figures2 à 3.
[Fig. 5] représente une vue détaillée, en perspective et de dessous, de la partie latérale externe de l'obturateur latéral de la grille d'auvent de l'agencement selon l'invention illustré en figures 2 à 4.
[Fig. 6] est une section de l'agencement illustré en figures 2 à 5, réalisée le long d'un pied avant, dans le plan VI-VI.
[Fig. 7] est une vue en perspective d'un repère orthonormé classique XYZ d'un véhicule automobile.

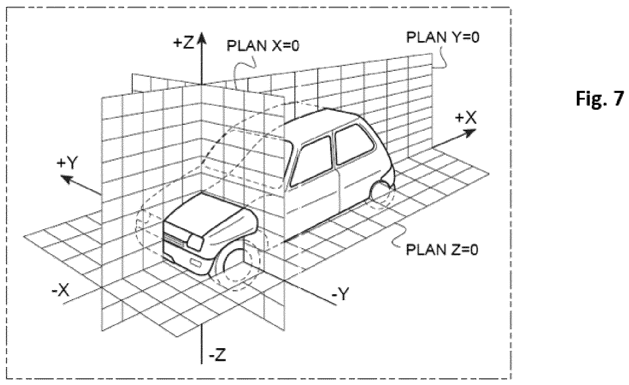

Les orientations exprimées dans la description sont données en référence à un repère orthonormé XYZ d'un véhicule automobile, dans lequel les axes X, Y, Z, correspondent respectivement à l'axe longitudinal (d'avant en arrière), transversal (orienté vers la droite du véhicule) et vertical du véhicule (orienté du bas vers le haut), comme représenté en figure 7.

Les orientations de l'agencement qui va être décrit, font donc référence à ces orientations du véhicule, les termes avant, arrière, et supérieur, inférieur faisant référence aux directions respectivement avant, arrière, et supérieure, inférieure du véhicule, lorsque l'obturateur latéral de la grille d'auvent de l'agencement selon l'invention est monté sur le véhicule.

Les termes « intérieur » et « extérieur » font référence respectivement à l'intérieur et à l'extérieur de l'habitacle du véhicule ou le cas échéant à l'intérieur et à l'extérieur du compartiment moteur fermé par un capot.

Il est rappelé que le terme « externe » fait référence à une position orientée vers et à proximité d'un bord latéral du véhicule par rapport au centre du véhicule (plan Y=0 sur la figure 7). Le terme « interne » fait référence à une position orientée vers le centre du véhicule.

La figure 1 a été commentée en introduction pour décrire l'espace latéral E à obturer entre le pied avant 3 et l'aile 2, à la base extérieure du pare-brise P.

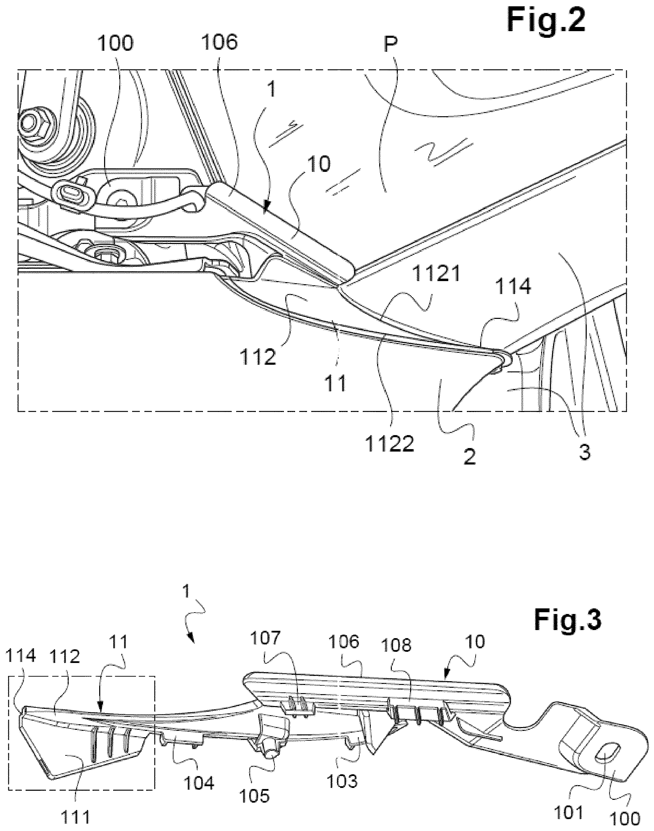

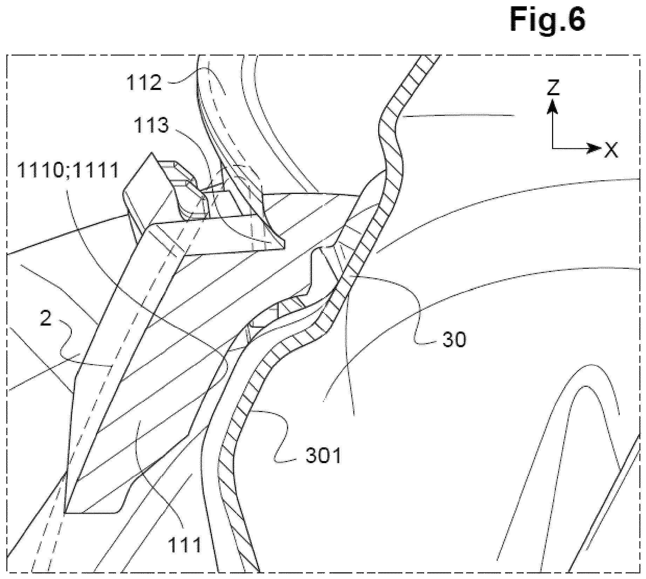

Les figures 2 à 6 vont être commentées ensemble.

Ces figures 2 à 6 représentent un mode particulier de réalisation d'un agencement latéral entre une aile 2, un pied avant 3 adjacents, et un obturateur latéral de la grille d'auvent 1 d'un véhicule automobile, conformément à l'invention.

L'obturateur latéral 1 est réalisé en une matière souple, déformable élastiquement. La matière est à base de thermoplastique(s) vulcanisé(s), dénommé aussi par l'acronyme TPV.

L'obturateur 1 est constitué d'une seule pièce comprenant deux parties 10, 11 : une partie principale 10 et une partie latérale externe 11. La partie principale 10 obture la partie d'espace interne E0 et se fixe, de manière connue en soi, au niveau de la base latérale extérieure du pare-brise et de la partie inférieure 30, notamment sur le côté transverse interne, du pied avant 3.

En référence à la figure 3, les moyens de fixation de la partie principale 10 de l'obturateur comprennent deux crochets 103, 104, qui se prennent dans le bord tombé de l'aile pour une fixation en vertical (Z+) et pour régler l'isostatisme selon la direction transversale (direction Y). Ces moyens de fixation comprennent aussi un trou de fixation traversant 101 porté par l'extrémité 100 de l'obturateur opposée à celle où se situe la partie latérale externe 11, permettant de fixer l'obturateur à la grille d'auvent, par plasti-rivet par exemple.

La partie principale 10 de l'obturateur porte une patte 107 qui vient au contact du pare-brise et bloque l'obturateur en transversal (direction Y), ainsi qu'un crochet de maintien 108 qui s'insère dans le bord transversal inférieur de la baie de pare-brise. Elle comprend une lèvre 106 qui se plaque dans le coin inférieur du pare-brise, contre la base extérieure du pare-brise. En outre la partie principale 10 de l'obturateur comprend un pion d'indexage et de maintien 105 qui s'indexe en longitudinal (direction X) dans une encoche que comporte une patte de fixation 21 portée par l'aile 2, et qui vient en appui en vertical (direction Z) sur ladite patte de fixation 21.

La partie latérale externe 11 de l'obturateur forme une extension latérale de la partie principale 10, les deux parties 10, 11 formant une pièce monobloc.

Cette partie latérale externe 11 comprend une partie obturante 112, transversale et sensiblement à l'horizontale, qui obture la partie d'espace E1 de l'espace latéral E non obturée par la partie principale 10 de l'obturateur, et une partie de maintien 111 orientée sensiblement perpendiculairement à ladite partie obturante 112, un peu inclinée par rapport à la verticale, qui permet de retenir cette partie latérale externe 11 de l'obturateur dans la partie d'espace à obturer. Les deux parties obturante 112 et de maintien 111 sont reliées et articulées entre elles par une charnière 113 réalisée par une zone amincie de la matière de la pièce monobloc.

La partie obturante 112 de cette partie latérale externe 11 a une forme adaptée à celle de la partie d'espace E1 à obturer entre le pied avant 3 et le bord supérieur 20 de l'aile 2. Selon l'exemple, elle a une forme sensiblement triangulaire dont le bord arrière 1121 a une forme courbe qui suit la forme de la partie du pied avant qui lui est adjacente, et le bord avant 1122 (Fig. 2) a une forme courbe suivant la forme du bord supérieur de l'aile qui lui est adjacent, en se terminant en l'extrémité externe 114, par une forme effilée, compte-tenu que la pointe arrière de l'aile est assez étirée vers l'arrière.

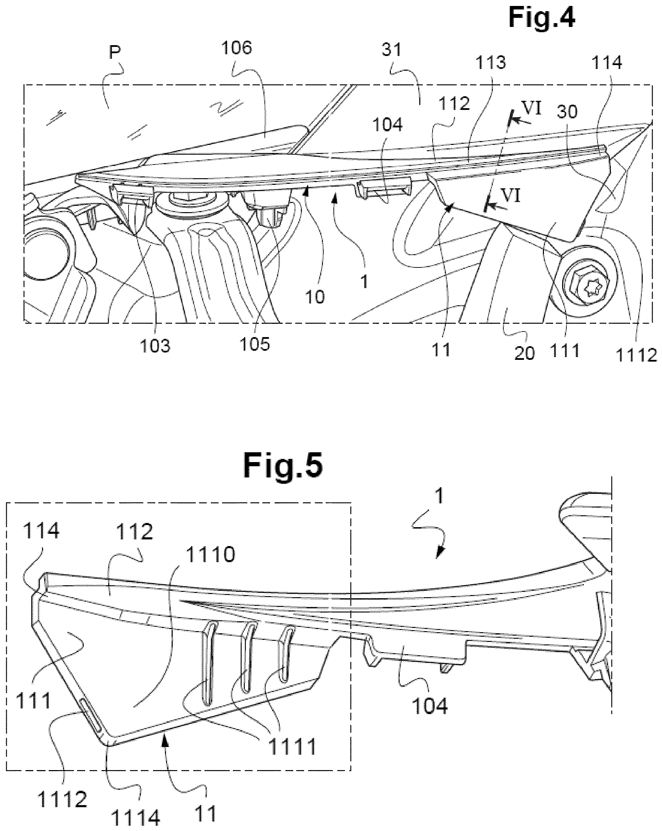

La partie de maintien 111 de cette partie latérale externe 11 s'étend vers le bas, suivant la partie inférieure du pied avant 30, dans l'espace récepteur entre le pied avant et la partie d'aile en vis-à-vis. Elle s'étend sensiblement suivant la direction verticale (- Z), dans un plan sensiblement perpendiculaire, un peu incliné, par rapport à la partie obturante 112, depuis la charnière 113 entre elles deux. Autrement dit l'angle entre la partie obturante et la partie de maintien n'est pas exactement de 90 degrés. Elle a une forme géométrique massive lui donnant de la tenue, ce qui permet de la maintenir dans l'espace récepteur alors qu'elle n'a pas de moyens de fixation côté externe du véhicule. A cette fin, ladite partie de maintien 111 a une forme de « pavé » presque entièrement triangulaire dont un angle du triangle 1114 pointe vers le bas (Fig. 5). La forme triangulaire lui donne de la tenue, une certaine résistance mécanique, la forme étant en outre adaptée à l'espace de réception entre le pied avant et l'aile et à permettre un appui sur l'intérieur de l'aile. La forme triangulaire massive permet de pouvoir insérer à force la partie de maintien 111 entre ces deux pièces (aile, pied avant) extrêmement serrées entre elles, espacées de moins de 70 mm, en lui permettant de rester bien tenue dans sa forme durant son insertion, de ne pas se plier sous la force exercée sur elle.

En référence à la figure 5 illustrant la partie latérale externe de l'obturateur, selon une vue en section au droit d'un bossage 301 (plan VI-VI) créé sur la partie inférieure 30 du pied avant 3, cette partie latérale externe 11 s'appuie sur ledit bossage 301 qui procure un soutien à cette partie 11 de l'obturateur, dans le sens vertical et transversal (directions Z et Y), par le biais d'un ensemble de nervures 1111, déformables élastiquement, un peu espacées les unes des autres, en relief apparent sur la face 1110 de ladite partie de maintien 111 qui est orientée vers le pied avant, ladite face ayant une forme concave adaptée à la forme du bossage. Ces nervures sont au nombre de trois selon l'exemple. Cette partie de maintien 111 est agencée contre le bossage 301 avec un faible jeu par rapport au bossage, par exemple d'environ 1 à 1,7 mm, pour tenir compte des dispersions géométriques relatives entre l'aile et le pied avant. La partie de maintien 111 est orientée suivant une direction sensiblement perpendiculaire par rapport à la partie obturante 112, et dans un plan sensiblement incliné par rapport à la verticale.

Ces nervures intégrées à la pièce sont en TPV, matière déformable élastiquement, comme toute la pièce monobloc constituant l'obturateur, à caractère compressible qui favorise le maintien avec le bossage. La compressibilité de la matière constituant les nervures permet d'ajuster le jeu avec le pied avant, et ainsi d'adapter la position de cette partie de maintien 111 entre l'aile et le pied avant.

Une nervure d'appui inférieure 1112, en relief apparent sur le bord latéral externe du pavé formant la partie de maintien 11, proche de la pointe inférieure du triangle, vient en appui sur l'intérieur de l'aile. L'extrémité latérale externe supérieure 114, à l'opposé de cette nervure d'appui inférieure 1112 suivant ledit bord latéral externe, est coupé droit, qui vient en butée contre la pointe supérieure externe de l'intérieur de l'aile. La partie latérale externe 11 de l'obturateur ne vient pas au contact du dessus de la joue d'aile 20 en mousse qui a une fonction d'étanchéité dans l'aile (figure 4). Ladite partie de maintien 111 est ainsi coincée entre le pied avant et l'aile, et permet le maintien de toute la partie latérale externe 11 de l'obturateur dans l'espace latéral externe E1.

L'agencement de carrosserie avec l'obturateur latéral qui vient d'être décrit permet de fermer l'espace latéral de la grille d'auvent, y compris la partie d'espace latéral externe E1 qui est très étroite.

L'obturateur latéral comportant une partie principale 10 qui se fixe par des moyens conventionnels au véhicule, et qui s'étend par la partie latérale externe 11 qui vient d'être décrite exempte de moyens de fixation conventionnels mais apte à s'insérer à force selon l'invention, permet donc de s'affranchir d'une fixation par clip, crochet, vis, rivet par exemple ou similaire dans l'espace latéral externe E1, une telle fixation étant compliquée voire impossible à implanter et à utiliser faute d'accessibilité. L'invention n'est toutefois pas limitée au mode de réalisation de la partie principale de l'obturateur déjà connue comportant des éléments de fixation conventionnels qui vient d'être décrite selon ce mode particulier, la partie latérale externe, objet de l'invention, pouvant être ajoutée comme extension latérale externe à d'autres formes principales d'un obturateur latéral de la grille d'auvent.

## Revendications

1. Agencement de carrosserie d'un véhicule automobile comprenant un pare-brise (P), un pied avant (3) et une aile (2) adjacente disposés de chaque côté du véhicule, en chaque coin inférieur extérieur du pare-brise, avec un espace latéral (E ) ménagé au moins entre l'aile et le pied avant et une partie d'un coin inférieur extérieur du pare-brise, adjacents entre eux, ledit espace latéral comprenant une partie d'espace latéral externe (E1 ) entre le pied avant et l'aile adjacente, ledit agencement comprenant un obturateur latéral (1) disposé dans ledit espace latéral, ledit obturateur comportant une partie latérale externe (11) qui est insérée à force dans la partie d'espace latéral externe (E1), et ladite partie latérale externe de l'obturateur comportant :
- une partie obturante (112) sensiblement horizontale, de forme adaptée à la forme de ladite partie d'espace latéral externe (E1), et,
- une partie de maintien (111) reliée à la partie obturante par une charnière (113) en matière amincie, s'étendant dans un plan sensiblement perpendiculaire par rapport à la partie obturante, ladite partie de maintien (111) étant massive et comportant une forme géométrique lui apportant de la tenue, l'obturateur latéral (1) ayant une partie principale (10) formant, avec ladite partie latérale externe (11), une pièce monobloc en matière déformable élastiquement, et ladite partie principale (10) étant fixée dans l'espace latéral (E, E0), hors ladite partie d'espace latéral externe (E1).

2. Agencement selon la revendication 1, **caractérisé en ce que** la forme géométrique apportant de la tenue à ladite partie de maintien (111) de ladite partie latérale externe (11) de l'obturateur latéral (1) est une forme triangulaire.

3. Agencement selon la revendication 2, **caractérisé en ce que** ladite forme triangulaire comporte un angle (1114) formant la pointe inférieure de ladite partie de maintien (111).

4. Agencement selon l'une quelconque des revendications 1 à 3, **caractérisé en ce que** le pied avant (3) comprend une partie inférieure (30) comportant un bossage (301) tourné vers ladite partie de maintien (111) de ladite partie latérale externe (11) de l'obturateur, et **en ce que** ladite partie de maintien (111) comporte des nervures déformables élastiquement (1111), apparentes en relief sur la face (1110) de ladite partie de maintien orientée vers le pied avant, ledit pied avant (3) et ladite partie latérale externe (11) de l'obturateur (1) étant agencés de sorte que lesdites nervures (1110) et le bossage (301) soient face à face et aptes à venir en contact, avec éventuellement un jeu pour absorber les dispersions géométriques entre l'aile et le pied avant, afin que le bossage du pied avant coopère avec lesdites nervures pour soutenir ladite partie latérale externe (11) de l'obturateur au moins suivant la direction verticale (Z).

5. Agencement selon la revendication 4, **caractérisé en ce que** ladite face (1110) de ladite partie de maintien (111) orientée vers le pied avant (3, 30) a une forme concave adaptée à la forme du bossage (301).

6. Agencement selon l'une quelconque des revendications 1 à 5, **caractérisé en ce que** ladite partie de maintien (111) de ladite partie latérale externe (11) de l'obturateur (1) comporte une nervure d'appui inférieure (1112), en relief apparent sur le bord latéral externe de ladite partie de maintien (111) et qui est en appui sur l'intérieur de l'aile.

7. Agencement selon l'une quelconque des revendications 1 à 6, **caractérisé en ce que** l'extrémité latérale externe supérieure (114) de la partie latérale externe (11) de l'obturateur latéral comporte un bord latéral externe qui vient en butée contre la partie supérieure externe de l'intérieur de l'aile, et en particulier ledit bord latéral externe est coupé droit.

8. Agencement selon l'une quelconque des revendications 1 à 7, **caractérisé en ce que** le pied avant (3) comporte une partie supérieure (31) formant le montant latéral de la baie de pare-brise et une partie inférieure (30) qui supporte l'aile (2) adjacente, et ladite partie supérieure (31) du pied avant et l'aile ont des couleurs ou tons extérieurs différents.

9. Véhicule automobile comprenant un agencement de carrosserie selon l'une quelconque des revendications précédentes.

## Patentansprüche

1. Karosserieanordnung eines Kraftfahrzeugs, umfassend eine Windschutzscheibe (P), eine A-Säule (3) und einen benachbarten Kotflügel (2), die auf jeder Seite des Fahrzeugs angeordnet sind, an jeder äußeren unteren Ecke der Windschutzscheibe, wobei ein seitlicher Raum (E) mindestens zwischen dem Kotflügel und der A-Säule und einem Teil einer äußeren unteren Ecke der Windschutzscheibe, die zueinander benachbart sind, eingerichtet ist, wobei der seitliche Raum einen äußeren seitlichen Teilraum (E1) zwischen der A-Säule und dem benachbarten Kotflügel umfasst, wobei die Anordnung einen in dem seitlichen Raum angeordneten seitlichen Verschluss (1) umfasst, wobei der Verschluss einen äußeren seitlichen Teil (11) beinhaltet, der in den äußeren seitlichen Teilraum (E1) eingepresst ist, und der äußere seitliche Teil des Verschlusses Folgendes beinhaltet:
- einen im Wesentlichen horizontalen Verschlussteil (112), dessen Form der Form des äußeren seitlichen Teilraums (E1) angepasst ist, und
- einen Halteteil (111), der mit dem Verschlussteil durch ein Scharnier (113) aus dünnem Material verbunden ist und sich in einer Ebene im Wesentlichen senkrecht zu dem Verschlussteil erstreckt, wobei der Halteteil (111) massiv ist und eine geometrische Form aufweist, die ihm Festigkeit verleiht,
wobei der seitliche Verschluss (1) einen Hauptteil (10) aufweist, der zusammen mit dem äußeren seitlichen Teil (11) ein einstückiges Bauteil aus elastisch verformbarem Material bildet, und der Hauptteil (10) außerhalb des äußeren seitlichen Teilraums (E1) in dem seitlichen Raum (E, E0) befestigt ist.

2. Anordnung nach Anspruch 1, **dadurch gekennzeichnet, dass** die geometrische Form, die dem Halteteil (111) des äußeren seitlichen Teils (11) des seitlichen Verschlusses (1) Festigkeit verleiht, eine dreieckige Form ist.

3. Anordnung nach Anspruch 2, **dadurch gekennzeichnet, dass** die dreieckige Form einen Winkel (1114) aufweist, der die untere Spitze des Halteteils (111) bildet.

4. Anordnung nach einem der Ansprüche 1 bis 3, **dadurch gekennzeichnet, dass** die A-Säule (3) einen unteren Teil (30) mit einem Vorsprung (301) aufweist, welcher dem Halteteil (111) des äußeren seitlichen Teils (11) des Verschlusses zugewandt ist, und dass der Halteteil (111) elastisch verformbare Rippen (1111) aufweist, die auf der zur A-Säule gerichteten Fläche (1110) des Halteteils als Relief sichtbar sind, wobei die A-Säule (3) und der äußere seitliche Teil (11) des Verschlusses (1) so angeordnet sind, dass die Rippen (1110) und der Vorsprung (301) einander gegenüberliegen und in Berührung kommen können, möglicherweise mit einem Spiel, um die geometrischen Abweichungen zwischen dem Kotflügel und der A-Säule auszugleichen, damit der Vorsprung der A-Säule mit den Rippen zusammenwirkt, um den äußeren seitlichen Teil (11) des Verschlusses mindestens in vertikaler Richtung (Z) zu stützen.

5. Anordnung nach Anspruch 4, **dadurch gekennzeichnet, dass** die zur A-Säule (3, 30) gerichtete Fläche (1110) des Halteteils (111) eine konkave Form aufweist, die der Form des Vorsprungs (301) angepasst ist.

6. Anordnung nach einem der Ansprüche 1 bis 5, **dadurch gekennzeichnet, dass** der Halteteil (111) des äußeren seitlichen Teils (11) des Verschlusses (1) eine untere Auflagerippe (1112) aufweist, die als Relief auf dem äußeren seitlichen Rand des Halteteils (111) sichtbar ist und an der Innenseite des Kotflügels aufliegt.

7. Anordnung nach einem der Ansprüche 1 bis 6, **dadurch gekennzeichnet, dass** das obere äußere seitliche Ende (114) des äußeren seitlichen Teils (11) des seitlichen Verschlusses einen äußeren seitlichen Rand aufweist, der an dem äußeren oberen Teil der Innenseite des Kotflügels zur Anlage kommt, und der äußere seitliche Rand insbesondere gerade geschnitten ist.

8. Anordnung nach einem der Ansprüche 1 bis 7, **dadurch gekennzeichnet, dass** die A-Säule (3) einen oberen Teil (31), der die seitliche Säule der Windschutzscheibenöffnung bildet, und einen unteren Teil (30), der den benachbarten Kotflügel (2) trägt, beinhaltet und der obere Teil (31) der A-Säule und der Kotflügel unterschiedliche Außenfarben oder -farbtöne aufweisen.

9. Kraftfahrzeug, das eine Karosserieanordnung nach einem der vorhergehenden Ansprüche umfasst.

## Claims

1. Arrangement of motor vehicle bodywork, comprising a windscreen (P), an A-pillar (3) and an adjacent wing (2) these being arranged on each side of the vehicle, at each external lower corner of the windscreen, with a lateral space (E) formed at least between the wing and the A-pillar and part of an external lower corner of the windscreen, which are adjacent to one another, said lateral space comprising an external lateral space part (E1) lying between the A-pillar and the adjacent wing, said arrangement comprising a lateral shutter (1) arranged in said lateral space, said shutter having an external lateral part (11) which is force-fitted into the external lateral space part (E1), and said external lateral part of the shutter comprising:
- a substantially horizontal shut-off part (112), the shape of which suits the shape of said external lateral space part (E1), and
- a retaining part (111) connected to the shut-off part by a live hinge (113) where the material has been thinned, extending in a plane substantially perpendicular with respect to the shut-off part, said retaining part (111) being solid and having a geometric shape that gives it structural integrity,
the lateral shutter (1) having a main part (10) forming, with said external lateral part (11), a one-piece component made of elastically deformable material, and said main part (10) being fastened in the lateral space (E, E0), outside of said external lateral space part (E1) .

2. Arrangement according to Claim 1, **characterized in that** the geometric shape providing said retaining part (111) of said external lateral part (11) of the lateral shutter (1) with structural integrity is a triangular shape.

3. Arrangement according to Claim 2, **characterized in that** said triangular shape comprises a corner (1114) forming the lower tip of said retaining part (111).

4. Arrangement according to any one of Claims 1 to 3, **characterized in that** the A-pillar (3) comprises a lower part (30) comprising a boss (301) facing towards said retaining part (111) of said external lateral part (11) of the shutter, and **in that** said retaining part (111) comprises elastically deformable ribs (1111) that are visible in relief on the face (1110) of said retaining part that is oriented towards the A-pillar, said A-pillar (3) and said external lateral part (11) of the shutter (1) being arranged such that said ribs (1110) and the boss (301) are facing one another and able to come into contact, possibly with clearance in order to absorb geometric spread between the wing and the A-pillar, so that the boss of the A-pillar cooperates with said ribs to support said external lateral part (11) of the shutter at least in the vertical direction (Z).

5. Arrangement according to Claim 4, **characterized in that** said face (1110) of said retaining part (111) that is oriented towards the A-pillar (3, 30) has a concave shape suited to the shape of the boss (301).

6. Arrangement according to any one of Claims 1 to 5, **characterized in that** said retaining part (111) of said external lateral part (11) of the shutter (1) comprises a lower bearing rib (1112), in relief visible on the external lateral edge of said retaining part (111) and which bears against the inside of the wing.

7. Arrangement according to any one of Claims 1 to 6, **characterized in that** the upper external lateral end (114) of the external lateral part (11) of the lateral shutter has an external lateral edge that abuts against the external upper part of the inside of the wing, and in particular said external lateral edge is cut straight.

8. Arrangement according to any one of Claims 1 to 7, **characterized in that** the A-pillar (3) comprises an upper part (31) forming the lateral upright of the windscreen opening and a lower part (30) which supports the adjacent wing (2), and said upper part (31) of the A-pillar and the wing have different exterior colours or tones.

9. Motor vehicle comprising a bodywork arrangement according to any one of the preceding claims.
